# EUROPÄISCHE PATENTSCHRIFT

(11) **EP 1 250 387 B1**
(45) Veröffentlichungstag und Bekanntmachung des Hinweises auf die Patenterteilung: **04.10.2006**
(21) Anmeldenummer: 00985199.9
(22) Anmeldetag: 19.12.2000
(51) Int. Cl.: C09D 5/02, E01F 9/04, E04B 1/74

(54) **BESCHICHTUNGSMITTEL MIT POLYMERKOMPLEX, VERFAHREN ZU DEREN HERSTELLUNG SOWIE DEREN VERWENDUNG**
POLYMER COMPLEX COATING AGENTS, METHOD FOR THE PRODUCTION AND USE THEREOF
PRODUITS DE REVETEMENT A COMPLEXE POLYMERE, PROCEDE DE FABRICATION DESDITS PRODUITS ET LEUR UTILISATION

(30) Priorität: 23.12.1999 DE 19962319
(43) Veröffentlichungstag der Anmeldung: 23.10.2002
(73) Patentinhaber: Celanese Emulsions GmbH, 61476 Kronberg/Ts. (DE); Clariant Produkte (Deutschland) GmbH, 65929 Frankfurt am Main (DE)
(72) Erfinder: CABRERA, Ivan, 63303 Dreieich (DE)
(74) Vertreter: Ackermann, Joachim
(86) Internationale Anmeldenummer: PCT/EP2000/012948
(87) Internationale Veröffentlichungsnummer: WO 2001/048096

(56) Entgegenhaltungen:
- EP-A- 0 620 256
- DE-A- 1 669 093
- DE-B- 2 407 505
- GB-A- 1 150 283
- US-A- 4 536 539
- US-A- 5 786 127

## Beschreibung

Beschichtungen, die schnell an der Oberfläche trocknen, werden für viele Anwendungen benötigt. Die beschichteten Gegenstände können praktisch sofort nach ihrer Beschichtung verwendet werden bzw. können unabhängig von Witterungsverhältnissen, wie z.B. Luftfeuchtigkeit und Temperatur, verarbeitet werden. Ein typisches Beispiel für solche Anwendungen sind Straßenmarkierungsfarben. Sie sollen sehr kurze Trocknungszeiten aufweisen, so dass die Arbeiten praktisch ohne Sperrung der Straße durchgeführt werden können. Andere Beispiele sind Außenfarben für Gebäudeflächen, Gebäudedächer, Schiffe und Container. Bei diesen Anwendungen muss die Beschichtung in kürzester Zeit oder sogar während des Applizierens trocknen, um Witterungseinflüssen (wie z.B. Regen) standhalten zu können. Weitere Anwendungsfelder sind Putze, die man während der Übergangszeit von Herbst auf Winter verwenden kann, sowie alle Arten von relativ dicken Beschichtungen, die man auf vertikale Mauerwerke appliziert. Derartige Beschichtungen müssen sehr schnell trocknen, so dass kein unerwünschtes Ablaufen auftritt.

Die konventionellen Systeme für schnell trocknende Beschichtungen sind lösungsmittelhaltige Systeme. Mit Farben auf Lösungsmittelbasis kann man die Geschwindigkeit der Trocknung durch Variation des Feststoffgehaltes und/oder des Lösungsmittels steuern.

Wasserverdünnbare Farben sind umweltfreundlich und setzen sich in letzter Zeit mehr und mehr gegenüber Farben auf Lösungsmittelbasis durch. Zur Herstellung eines Beschichtungsmittels auf wässriger Basis verwendet man als Bindemittel Polymerdispersionen.

Ein wesentlicher Nachteil wasserverdünnbarer Farben ist die Abhängigkeit der Trocknungsgeschwindigkeit von der Luftfeuchtigkeit. Bei niedriger Luftfeuchtigkeit ist diese oft schnell, manchmal sogar schneller als bei konventionellen Farben. Bei hohen Luftfeuchtigkeiten allerdings, wie z.B. morgens und abends, sowie vor oder nach Regenfällen, ist die Trocknungsgeschwindigkeit sehr langsam, da das Wasser sehr langsam verdunstet.

Für schnell trocknende Beschichtungsmittel auf wässriger Basis sind drei verschiedene Prinzipien mit praktischer Relevanz bekannt:
1) Flockulationsprinzip:
   a) Flockulation des ionisch stabilisierten Bindemittels nach Auftrag des Beschichtungsmittels, das ein Polyamin und Ammoniak als flüchtige Base enthält, dadurch, dass der Ammoniak verdampft (US-A-5 527 853, EP-A-0 594 321, EP-A-0 728 822, EP-A-0 409 459).
   b) Flockulation des ionisch stabilisierten Bindemittels dadurch, dass gleichzeitig mit dem Beschichtungsmittel eine Säurelösung (WO 94/29 391) oder eine Salzlösung versprüht wird (EP-A-0 200 249, US-A-4 571 415, US-A-5 403 393).
2) Viskositätsänderung an der Oberfläche des Beschichtungsmittels dadurch, dass:
   a) ein Verdicker auf die frische Beschichtung appliziert wird, wodurch es zu einer Erhöhung der Viskosität kommt (EP-A-0 721 003), oder
   b) eine Base auf die frische Beschichtung appliziert wird, die einen Verdicker enthält, der jedoch durch Einstellung eines niedrigen pH-Wertes nicht aktiviert war.
3) Wasser-Absorptions-Methode:
   Hierbei werden wasserabsorbierende Stoffe, wie z.B. Kieselgele, lonenaustauscher und Polymergele, während der Auftragung des Beschichtungsmittels eingesetzt.

Bei Beschichtungsmitteln, bei denen die Trocknung durch Verdampfen einer flüchtigen Base wie Ammoniak aktiviert wird, ist die Anwendungsbreite begrenzt (Geruchsbelästigung etc.). Beschichtungssysteme, die nach ihrer Applikation mit Salzen in Kontakt gebracht werden, haben den Nachteil, dass man auf die Verwendung von schwach stabilisierten Dispersionen eingeschränkt ist. Die verwendeten Salze müssen als Lösung mitversprüht werden oder nachträglich aufgesprüht bzw. aufgestreut werden. Im Fall des nachträglichen Aufbringens der Salze in fester oder gelöster Form können erhebliche Anteile durch Regen weggewaschen werden, wodurch die Effizienz des Verfahrens stark beeinträchtigt wird. Die durch Regen weggewaschenen Salzmengen gelangen meist ins Grundwasser, weshalb diese Art der Trocknung unerwünscht ist.

Aus DE 1 669 093 A1 sind Anstrich- und Beschichtungsmittel bekannt, die auf wässrigen Polyacrylat- oder Polymethacrylat-Dispersionen basieren und zusätzlich unter anderem Poly-N-vinyl-pyrrolidon aufweisen. In diesem Dokument werden keine Komplexe von Polysäuren mit Poly-N-vinyl-pyrrolidon offenbart.

DE 24 07 505 A1 beschreibt wässrige Kunststoffpulver-Dispersionen, die aus Kunststoffpulvern hergestellt werden, welche in Dispergiermitteln dispergiert werden. Als Dispergiermittel wird unter anderem Polyvinylpyrrolidon vorgeschlagen. Dieses Dokument beschreibt keine durch Emulsionspolymerisation hergestellten Polymerdispersionen.

Überraschenderweise wurde nun gefunden, dass wasserverdünnbare Bindemittel, basierend auf einer durch Emulsionspolymerisation hergestellten Polymerdispersion, die mindestens einen Polysäure/Polyvinylpyrrolidon-Komplex enthalten, eine deutlich beschleunigte Trocknung der Oberfläche bzw. eine schnellere Waschfestigkeit zeigen.

Die Gesamtkonzentration an Polysäure/Polyvinylpyrrolidon-Komplexen im Bindemittel beträgt dabei bevorzugt weniger als 10 Gew.-%, besonders bevorzugt weniger als 5 Gew.-%, und insbesondere weniger als 2 Gew.-%.

Bei den Polysäuren und den Polyvinylpyrrolidonen kann es sich jeweils um Homo- oder Copolymere handeln. Es können alle dem Fachmann bekannten Polysäuren eingesetzt werden. Bevorzugte Polysäuren sind Polyacrylsäuren, Polymethacrylsäuren und Poly(co-methylvinylether-maleinsäureanhydride).

Besonders bevorzugte Polysäuren sind die Poly(co-methylvinylethermaleinsäureanhydride). Als Polysäuren können auch Gemische von Polysäuren eingesetzt werden.

Als Polyvinylpyrrolidone können alle dem Fachmann bekannten Polyvinylpyrrolidone eingesetzt werden. Bevorzugte Polyvinylpyrrolidone sind Poly(homo-N-vinylpyrrolidone) und Copolymere aus N-Vinylpyrrolidon und Estern von Acrylsäure, Methacrylsäure und/oder Maleinsäure, die auch in Form einer Kolloiddispersionsmischung verwendet werden können, wie z.B. in der EP-A-0 894 809 offenbart. Als Polyvinylpyrrolidone können auch Gemische von Polyvinylpyrrolidonen eingesetzt werden.

Bei den Polysäure/Polyvinylpyrrolidon-Komplexen handelt es sich bevorzugt um 1:1 Komplexe.

Zur Verbesserung des Trocknungsverhaltens können die erfindungsgemäßen Bindemittel neben den Polysäure/Polyvinylpyrrolidon-Komplexen gegebenenfalls noch eine oder mehrere wasserlösliche Zirkonverbindungen, wie z.B. Ammoniumzirkoncarbonat, Zirkoniumacetoacetat, Zirkoniumhydroxychlorid, Zirkoniumorthosulfat, Zirkoniumpropionat und/oder Kaliumzirkoniumphosphat, enthalten.

Bevorzugt enthalten die Bindemittel bis zu 50 Gew.-%, besonders bevorzugt 0,5 bis 10 Gew.-% und insbesondere 1 bis 5 Gew.-% Zirkonverbindungen, berechnet als Zirkoniumoxid.

Des weiteren können die erfindungsgemäßen Bindemittel gegebenenfalls noch Salze, Säuren, Basen, niedermolekulare organische Stoffe, Filmbildemittel, Dispergiermittel, Schutzkolloide, Stabilisatoren, Tenside, Emulgatoren, Polymere, Verdickungsmittel, Netzmittel, Pigmente, Füllstoffe, Konservierungsmittel und/oder Entschäumer enthalten.

Vorteilhafterweise werden an die in den Bindemitteln enthaltenen durch Emulsionspolmerisation hergestellten Polymerdispersionen, keine besonderen Anforderungen gestellt. So können auch relativ stabile Polymerdispersionen, wie z.B. schutzkolloidstabilisierte Dispersionen, verwendet werden. Ebenso brauchen die Bindemittel nicht notwendigerweise auf einen hohen pH-Wert eingestellt zu werden.

Die Polymerdispersionen können auf Homo-und/oder Copolymerisaten basieren und enthalten gegebenenfalls noch Additive und Hilfsstoffe. Die Herstellung der Polymerdispersionen erfolgt durch die dem Fachmann bekannte Technik der Emulsionspolymerisation.

In einer bevorzugten Ausführungsform enthalten die Copolymerisate 70 bis 99,7 Gew.-%, bezogen auf die Gesamtmenge der Monomere, an Monomeren aus der Gruppe der Alkene, wie z.B. Ethen, Propen oder Buten, der Diene, wie z.B. Butadien oder Isopren, der Acryl- und Methacrylsäureester von (C₁-C₁₂)-Monoalkoholen, vorzugsweise von (C₁-C₈)-Monoalkoholen, beispielsweise Methanol, Ethanol, isoPropanol, iso-Butanol, n-Butanol und 2-Ethylhexylalkohol, der vinylaromatischen Monomere, der Vinylester von (C₁-C₁₂)Alkanmonocarbonsäuren, beispielsweise Vinylacetat, Vinylpropionat, Vinyl-n-butyrat, Vinyllaurat, ® VeoVa 9 und ® VeoVa 10 (Shell-Chemie, Vinylester α,α-Dialkyl-verzweigter Monocarbonsäuren), der Vinylhalogenide, beispielsweise Vinylchlorid und Vinylidenchlorid, der α,β-monoolefinisch ungesättigten Nitrile, beispielsweise Acrylnitril und Methacrylnitril, sowie der Alkylester von monoolefinisch ungesättigten Dicarbonsäuren, beispielsweise Malein- und Fumarsäuredi-n-butylester.

Die Copolymerisate enthalten vorzugsweise außerdem 0,3 bis 10 Gew.-%, besonders bevorzugt 0,5 bis 5 Gew.-%, bezogen auf die Gesamtmenge der Monomere, α,β-mono-olefinisch ungesättigte Mono- und Dicarbonsäuren, wie z.B.

Acrylsäure, Methacrylsäure, Itaconsäure, Maleinsäure und Fumarsäure, sowie gegebenenfalls an den Stickstoffatomen substituierte Amide, wie z.B. Acrylamid, Methacrylamid, N-Methylolacrylamid und N-Butoxymethacrylamid.

Weiterhin können in den Copolymerisaten 0 bis 20 Gew.-%, vorzugsweise 0,5 bis 5 Gew.-%, bezogen auf die Gesamtmenge der Monomere, funktionelle Monomere enthalten sein, wie beispielsweise Hydroxylgruppen-haltige Monomere, wie Hydroxyalkylacrylate und -methacrylate, insbesondere Hydroxyethylmethacrylat und Hydroxypropylmethacrylat, und/oder die Nasshaftung verbessernde Acetylacetoxygruppen-haltige Monomere, insbesondere Allylacetoacetat, Acetylacetoxyethylmethacrylat und Acetylacetoxybutylmethacrylat, und/oder vemetzend wirkende Monomere wie Epoxidgruppen-haltige und Silangruppen-haltige Monomere, insbesondere Glycidylacrylat, Glycidylmethacrylat, Vinyltrimethoxysilan und Methacryloxypropyltrimethoxysilan, und/oder stickstoffhaltige Monomere aus der Gruppe der polymerisierbaren Monomere mit einer Amino-, Ureido- oder N-heterocyclischen-Gruppe, beispielsweise Dimethylaminoethylacrylat und -methacrylat, N-(2-Methacryloylethyl)ethylenharnstoff, und/oder Ketogruppen-haltige Monomere, beispielsweise Diacetonacrylamid, Diacetonmethacrylamid, Acrolein und 2-Butanonmethacrylsäureester.

In selbstvemetzenden Dispersionen können Ketogruppen-haltige Polymerisate noch bis zu 5 Gew.-%, bezogen auf die Gesamtmenge der Monomere, eines di- oder polyfunktionellen Carbonsäurehydrazids, beispielsweise Adipinsäurehydrazid, enthalten.

Zur Herstellung der erfindungsgemäßen Bindemittel wird eine durch Emulsionspolymerisation hergestellte Polymerdispersion, die noch Zusatzstoffe und/oder Hilfsstoffe enthalten kann, mit mindestens einem Polysäure/Polyvinyl-pyrrolidon-Komplex versetzt, und anschließend werden der Polymerdispersion / Komplex-Mischung gegebenenfalls noch eine oder mehrere wasserlösliche Zirkonverbindungen, Salze, Säuren, Basen, niedermolekulare organische Stoffe, Filmbildemittel, Dispergiermittel, Schutzkolloide, Stabilisatoren, Tenside, Emulgatoren, Polymere, Verdickungsmittel, Netzmittel, Pigmente, Füllstoffe, Konservierungsmittel und/oder Entschäumer zugesetzt.

Die erfindungsgemäßen Bindemittel eignen sich als Bindemittel für wasserverdünnbare Beschichtungsmittel im weitesten Sinne.

Ein weiterer Gegenstand der vorliegenden Erfindung sind demnach auch wasserverdünnbare Beschichtungsmittel, welche die erfindungsgemäßen Bindemittel enthalten, und die dadurch eine beschleunigte Trocknung der Oberfläche bzw. eine schnellere Waschfestigkeit zeigen.

Bevorzugt handelt es sich bei den erfindungsgemäßen Beschichtungsmitteln um Grundierungen, Außenfarben, Innenfarben, Anstrichmittel, Außenputze, Innenputze oder Beschichtungsmittel für Mauerwerke im weitesten Sinne.

Besonders geeignet sind die erfindungsgemäßen Beschichtungsmittel als Straßenmarkierungsfarben.

Ein Verfahren zur Herstellung der erfindungsgemäßen Beschichtungsmittel kann darin bestehen, dass einem erfindungsgemäßen Bindemittel die notwendigen Zusatz- und/oder Hilfsstoffe, wie z.B. Pigmente, Füllstoffe, Filmbildemittel, Dispergiermittel, Schutzkolloide, Stabilisatoren, Tenside, Emulgatoren, Polymere, Verdickungsmittel, Netzmittel, Konservierungsmittel und/oder Entschäumer zugesetzt werden.

Ein weiteres Verfahren zur Herstellung der erfindungsgemäßen Beschichtungsmittel kann darin bestehen, ein wasserverdünnbares Beschichtungsmittel mit mindestens einem erfindungsgemäßen Bindemittel zu versetzen.

Schließlich lassen sich die erfindungsgemäßen Beschichtungsmittel auch dadurch herstellen, dass ein wasserverdünnbares Beschichtungsmittel enthaltend durch Emulsionspolymerisation hergestellte Polymerdispersion mit mindestens einem Polysäure/Polyvinylpyrrolidon-Komplex und gegebenenfalls einer oder mehreren wasserlöslichen Zirkonverbindungen versetzt wird.

Gegenstand der Erfindung ist auch die Verwendung von Polysäure/Polyvinylpyrrolidon-Komplexen und Mischungen, enthaltend mindestens einen Polysäure / Polyvinylpyrrolidon-Komplex und gegebenenfalls eine oder mehrere wasserlösliche Zirkonverbindungen, in wasserverdünnbaren Bindemitteln enthaltend durch Emulsionspolymerisation hergestellte Polymerdispersion und in Beschichtungsmitteln enthaltend durch Emulsionspolymerisation hergestellte Polymerdispersion und insbesondere deren Verwendung als Trocknungsbeschleuniger.

Die nachfolgenden Beispiele sollen die Erfindung näher erläutern, ohne sie jedoch einzuschränken.

In den folgenden Beispielen werden
a) Polysäure/Polyvinylpyrrolidon-Komplexe hergestellt,
b) die Trocknungszeiten von Bindemitteln mit und ohne Polysäure/Polyvinylpyrrolidon-Komplex bestimmt,
c) Fassadenfarben mit und ohne Polysäure/Polyvinylpyrrolidon-Komplex hergestellt und deren Waschfestigkeiten bestimmt,
d) Innenfarben mit und ohne Polysäure/Polyvinylpyrrolidon-Komplex hergestellt und deren Waschfestigkeiten bestimmt, und
e) Kunstharzputze mit und ohne Polysäure/Polyvinylpyrrolidon-Komplex und Kunstharzputze mit und ohne Polysäure/Polyvinylpyrrolidon-Komplex sowie Zirkonverbindung hergestellt und deren Waschfestigkeiten bestimmt.

a) Herstellung von Polysäure/Polyvinylpyrrolidon-Komplexen:
Beispiel 1: Herstellung eines 1:1 Poly(co-methylvinylether-maleinsäureanhydrid)/Poly(homo-vinylpyrrolidon)-Komplexes:
   Dazu werden gleiche Mengen einer 10 %igen Poly(co-methylvinylethermaleinsäureanhydrid)-Lösung (Gantrez® AN 169 der Fa. ISP Global) und einer 10 %igen Polyvinylpyrrolidon K-90-Lösung (Fa. ISP Global) unter sorgfältigem Rühren gut miteinander vermischt. Dabei entsteht eine hochviskose, weiß-gelbliche Mischung, deren pH-Wert mit konzentriertem Ammoniak auf ca. 7,5 eingestellt wird.
Beispiel 2: Herstellung eines 1:1 Poly(co-methylvinylether-maleinsäureanhydrid)/Poly(co-vinylpyrrolidon-acrylsäureester)-Komplexes:
   Dazu werden gleiche Mengen einer 10 %igen Poly(co-methylvinylethermaleinsäureanhydrid)-Lösung (Gantrez® AN 169 der Fa. ISP Global) und einer 10 %igen Poly(co-vinylpyrrolidon-acrylsäureester)-Lösung (Mowiplus® SA 575 der Fa. Clariant) unter sorgfältigem Rühren gut miteinander vermischt. Dabei entsteht eine hochviskose, weiß-gelbliche Mischung, deren pH-Wert mit konzentriertem Ammoniak auf ca. 7,5 eingestellt wird.

b) Bestimmung der Trocknungszeiten von Bindemitteln mit und ohne Polysäure/Polyvinylpyrrolidon-Komplex:
Als Bindemittel werden die vier Polymerdispersionen A, B, C und D, bzw. deren Mischungen mit Polysäure/Polyvinylpyrrolidon-Komplexen, verwendet. Die Mischungen der Polymerdispersionen mit den Polysäure/Polyvinylpyrrolidon-Komplexen werden im folgenden als Polymerdispersion/Komplex-Mischungen bezeichnet.
Polymerdispersionen A, B, C und D:
Dispersion A (Mowilith® DM 2452 der Fa. Clariant): Wässrige, weichmacherfreie Dispersion (ca. 50 %) aus Vinylacetat, Versaticsäure-Vinylester und einem Acrylsäureester. Die Dispersion ist stabilisiert mit oberflächenaktiven Substanzen.
Dispersion B (Mowilith® LDM 1871 der Fa. Clariant): Wässrige, weichmacherfreie Dispersion (ca. 53 %) aus Vinylacetat und Ethylen. Die Dispersion ist stabilisiert mit oberflächenaktiven Substanzen und hochpolymeren Verbindungen.
Dispersion C (Mowilith® DM 777 der Fa. Clariant): Wässrige, weichmacherfreie Dispersion (ca. 46 %) auf Basis von Acryl- und Methacrylsäureestem. Die Dispersion ist stabilisiert mit oberflächenaktiven Substanzen.
Dispersion D (Mowilith® LDM 6636 der Fa. Clariant): Wässrige, weichmacherfreie Dispersion (ca. 50 %) auf Basis von Acrylsäureestern und Styrol. Die Dispersion ist stabilisiert mit oberflächenaktiven Substanzen.

Herstellung der Polymerdispersion/Komplex-Mischungen:
Zur Herstellung der Polymerdispersion/Komplex-Mischungen werden die Polymerdispersionen A bis D unter Rühren gut mit dem Polysäure/Polyvinylpyrrolidon-Komplex aus Beispiel 1 vermischt. Der Gehalt an Komplex in der Mischung beträgt 1 Gew.-% bezogen auf den Feststoffgehalt der Mischung. Bestimmung der Trocknungszeiten der Polymerdispersionen bzw. der Polymerdispersion/Komplex-Mischungen:
In den Beispielen 3 bis 6 werden nach einer Reifezeit von einem Tag die Dispersionen A bis D und die Dispersionen A bis D, enthaltend den Polysäure/Polyvinylpyrrolidon-Komplex aus Beispiel 1, mit einem 300 µm Spaltrakel auf eine Glasplatte gezogen. Nach dem Aufziehen wird sofort ein Tropfen Wasser auf die Filme gegeben. Anhand der Trübung des Tropfens wird beurteilt, ob eine Hautbildung bzw. Trocknung der Filme stattfindet. Nach Aufbringen des ersten Tropfens wird alle 5 Minuten ein weiterer Tropfen auf die Filme gegeben und die Trübung der Tropfens beurteilt. Der Zeitpunkt, ab dem keine Trübung der Tropfens mehr beobachtet wird, gibt die Trocknungszeit der Dispersionsfilme an. In Tabelle 1 sind die so ermittelten Trocknungszeiten der Dispersionsfilme A bis D und die Trocknungszeiten der Dispersionsfilme A bis D, enthaltend den Polysäure/ Polyvinylpyrrolidon-Komplex aus Beispiel 1, aufgeführt.

**Tabelle 1: Trocknungszeiten der Polymerdispersionen A bis D und der entsprechenden Polymerdispersion/Komplex-Mischungen bei Raumtemperatur**

| Beispiel | Dispersion | ohne Komplex, Trocknungszeit in Minuten | mit Komplex, Trocknungszeit in Minuten |
|---|---|---|---|
| 3 | A | 20 | 0 |
| 4 | B | 5 | 0 |
| 5 | C | 25 | 0 |
| 6 | D | 25 | 0 |

Man erkennt, dass die Trocknungszeiten von allen Dispersionen durch Zugabe eines Polysäure/Polyvinylpyrrolidon-Komplexes drastisch verkürzt werden.
c) Herstellung von Fassadenfarben mit und ohne Polysäure/Polyvinylpyrrolidon-Komplex und Bestimmung deren Waschfestigkeit:
Tabelle 2 zeigt die Rezeptur der in den Beispielen 7 bis 13 hergestellten Fassadenfarben. Als Bindemittel werden die Polymerdispersionen A bis D bzw. Mischungen von diesen mit den Polysäure/Polyvinylpyrrolidon-Komplexen aus den Beispielen 1 bzw. 2 verwendet. Die Polymerdispersion/Komplex-Mischungen enthalten immer 1 Gew.-%. an Komplexen. Die Fassadenfarben werden durch Mischen der in Tabelle 2 angegebenen Bestandteile hergestellt.

**Tabelle 2: Rezeptur der Fassadenfarben der Beispiele 7 bis 13**

| Bestandteile | Gewichtsteile |
|---|---|
| Wasser | 130,0 |
| Mowiplus® XW 330 (Fa. Clariant) | 3,0 |
| Tylose® MH 4000 KG 4 (Fa. Clariant) | 2,0 |
| Calgon® N, 10 % (Fa. BK Guilini) | 11,0 |
| Entschäumer Agitan® 232 (Fa. Münzing Chemie GmbH) | 4,0 |
| Titandioxid Kronos® 2065 ( Fa. Kronos) | |
| Omyacarb® 5 GU ( Fa. Omyacarb) | 226,0 |
| Micro Talc® AT 1 (Fa. Norwegian) | 168,0 |
| China Clay® B (Fa. ECCI ) | 38,0 |
| Konservierungsmittel Mergal® K 10 N (Fa. Troy AG) | 20,0 |
| Bindemittel | 2,0 |
| Ammoniak konz. (25 %ig) (Fa. Riedel de Haen) | 375,0 |
| Testbenzin (Fa. ESSO Becker) | 2,0 |
| Butyldiglykolacetat (Fa. Merck-Schuchardt) | 11,0 |
| | 8,0 |
| | 1000,0 |

Bestimmung der Waschfestigkeiten der Fassadenfarben:
Zur Bestimmung der Waschfestigkeiten der Fassadenfarben der Beispiele 7 bis 13 werden diese mit einem 100 µm bzw. 300 µm Spaltrakel auf eine Glasplatte (6 cm x 16 cm) aufgezogen. Die Glasplatten werden nach verschiedenen Zeiten (Stoppuhr) in ein Becherglas gestellt und mit 100 g E-Wasser gleichmäßig überspült. Mit Hilfe eines Photometers wird anschließend die Transmission (%) des Spülwassers bestimmt. Dabei gilt, dass mit zunehmender Trocknung der Farbfilme die Transmission des Spülwassers zunimmt. Eine Transmission von 100 % bedeutet eine vollständige Trocknung des Films.
Beispiel 7: Waschfestigkeiten von Fassadenfarben (Nassfilmdicke 300 µm) bei Raumtemperatur, die als Bindemittel die Dispersion A, mit und ohne Komplex aus Beispiel 1, enthalten:

| Zeit (Minuten) | Transmission ohne Komplex (%) | Transmission mit Komplex (%) |
|---|---|---|
| 2 | 0,5 | 4 |
| 5 | 0,5 | 16 |
| 7 | 0,5 | 18 |
| 10 | 0,5 | 46 |
| 15 | 0,8 | 51 |
| 25 | 2 | 77 |
| 30 | 34 | 94 |
| 35 | 60 | 100 |
| 40 | 82 | 100 |
| 45 | 100 | 100 |

Beispiel 8: Waschfestigkeiten von Fassadenfarben (Nassfilmdicke 100 µm) bei Raumtemperatur, die als Bindemittel die Dispersion B, mit und ohne Komplex aus Beispiel 1, enthalten:

| Zeit (Minuten) | Transmission ohne Komplex (%) | Transmission mit Komplex (%) |
|---|---|---|
| 2 | 11 | 89 |
| 5 | 21 | 94 |
| 7 | 22 | 96 |
| 10 | 81 | 100 |
| 15 | 100 | 100 |

Beispiel 9: Waschfestigkeiten von Fassadenfarben (Nassfilmdicke 300 µm) bei Raumtemperatur, die als Bindemittel die Dispersion C, mit und ohne Komplex aus Beispiel 1, enthalten:

| Zeit (Minuten) | Transmission ohne Komplex (%) | Transmission mit Komplex (%) |
|---|---|---|
| 2 | 0,5 | 2 |
| 5 | 0,5 | 5 |
| 7 | 0,7 | 35 |
| 10 | 0,8 | 44 |
| 15 | 3 | 55 |
| 20 | 4 | 60 |
| 25 | 6 | 70 |
| 35 | 87 | 90 |
| 40 | 95 | 100 |
| 45 | 100 | 100 |

Beispiel 10: Waschfestigkeiten von Fassadenfarben (Nassfilmdicke 100 µm) bei Raumtemperatur, die als Bindemittel die Dispersion D, mit und ohne Komplex aus Beispiel 1, enthalten:

| Zeit (Minuten) | Transmission ohne Komplex (%) | Transmission mit Komplex (%) |
|---|---|---|
| 2 | 1 | 36 |
| 5 | 3 | 70 |
| 7 | 98 | 85 |
| 10 | 100 | 100 |
| 15 | 100 | 100 |

Beispiel 11: Waschfestigkeiten von Fassadenfarben (Nassfilmdicke 100 µm) bei +5°C, die als Bindemittel die Dispersion B, mit und ohne Komplex aus Beispiel 1, enthalten:

| Zeit (Minuten) | Transmission ohne Komplex (%) | Transmission mit Komplex (%) |
|---|---|---|
| 5 | 2 | 62 |
| 7 | 3 | 74 |
| 10 | 4 | 90 |
| 15 | 37 | 95 |
| 20 | 75 | 99 |
| 25 | 99 | 99 |

Beispiel 12: Waschfestigkeiten von Fassadenfarben (Nassfilmdicke 100 µm) bei +5°C, die als Bindemittel die Dispersion C, mit und ohne Komplex aus Beispiel 1, enthalten:

| Zeit (Minuten) | Transmission ohne Komplex (%) | Transmission mit Komplex (%) |
|---|---|---|
| 5 | 2 | 48 |
| 7 | 3 | 60 |
| 10 | 7 | 67 |
| 15 | 31 | 82 |
| 20 | 52 | 92 |
| 25 | 99 | 99 |

Beispiel 13: Waschfestigkeiten von Fassadenfarben (Nassfilmdicke 300 µm) bei +5°C, die als Bindemittel die Dispersion C, mit und ohne Komplex aus Beispiel 2, enthalten:

| Zeit (Minuten) | Transmission ohne Komplex (%) | Transmission mit Komplex (%) |
|---|---|---|
| 5 | 1 | 2 |
| 10 | 2 | 5 |
| 15 | 3 | 33 |
| 25 | 5 | 55 |
| 30 | 5 | 70 |
| 40 | 38 | 83 |
| 50 | 99 | 94 |

Man erkennt, dass die Waschfestigkeiten der Fassadenfarben in allen Beispielen durch Zugabe eines Polysäure/Polyvinylpyrrolidon-Komplexes erhöht werden.
d) Herstellung von Innenfarben mit und ohne Polysäure/Polyvinylpyrrolidon-Komplex und Bestimmung deren Waschfestigkeiten:
Tabelle 3 zeigt die Rezeptur der in Beispiel 14 hergestellten Innenfarben. Als Bindemittel wird die Polymerdispersion C, bzw. eine Mischung dieser mit dem Polysäure/Polyvinylpyrrolidon-Komplex aus Beispiel 1, verwendet. Die Polymerdispersion/Komplex-Mischung enthält 1 Gew.-% an Komplex. Die Innenfarben werden durch Mischen der in Tabelle 3 angegebenen Bestandteile hergestellt.

**Tabelle 3: Rezeptur der Innenfarben des Beispiels 14**

| Bestandteile | Gewichtsteile |
|---|---|
| Wasser | 310 |
| Tylose® MHB 10000 yp (Fa. Clariant) | 3,5 |
| Calgon® N (10 % aqueous sol.) (Fa. BK Guilini) | 15 |
| Additol® XW 330 (Fa Clariant) | 2 |
| Agitan® 217 (Fa. Münzing Chemie GmbH) | 1 |
| Mergal® AF (Fa. Troy AG) | 2 |
| Ammoniak (Fa. Riedel de Haen) | 0,5 |
| Titandioxid Kronos® 2065 (Fa. Kronos) | 70 |
| Talcum AT 1 | 40 |
| Socal® P 2 (Fa. Deutsche Solvay-Werke GmbH) | 100 |
| China Clay® B (Fa. ECCI) | 40 |
| Omyacarb® 2 GU (Fa. Omyacarb) | 150 |
| Omyacarb® 5 GU (Fa. Omyacarb) | 150 |
| Bindemittel | 100 |
| White spirit® (Fa. ESSO Becker) | 10 |
| Butyldiglykolacetat (Fa. Merck-Schuchardt) | 6 |
| | 1000,0 |

Bestimmung der Waschfestigkeiten der Innenfarben:
Die Bestimmung der Waschfestigkeiten der Innenfarben aus Beispiel 14 erfolgt analog der Bestimmung der Waschfestigkeiten der Fassadenfarben der Beispiele 7 bis 13.
Beispiel 14: Waschfestigkeiten von Innenfarben (Nassfilmdicke 100 µm) bei Raumtemperatur, die als Bindemittel die Dispersion C, mit und ohne Komplex aus Beispiel 1, enthalten:

| Zeit (Minuten) | Transmission ohne Komplex (%) | Transmission mit Komplex (%) |
|---|---|---|
| 2 | 3 | 13 |
| 5 | 7 | 25 |
| 7 | 15 | 63 |
| 10 | 26 | 96 |
| 15 | 100 | 100 |

Man erkennt, dass die Waschfestigkeit der Innenfarbe durch Zugabe eines Polysäure/Polyvinylpyrrolidon-Komplexes erhöht wird.
e) Herstellung von Putzen mit und ohne Polysäure/Polyvinylpyrrolidon-Komplex sowie von Putzen mit und ohne Polysäure/Polyvinylpyrrolidon-Komplex sowie Zirkonverbindung und Bestimmung deren Waschfestigkeiten:
Tabelle 4 zeigt die Rezeptur der in den Beispielen 15 und 16 hergestellten Kunstharzputze. In Beispiel 15 wird die Polymerdispersion A, bzw. eine Mischung dieser mit dem Polysäure/Polyvinylpyrrolidon-Komplex aus Beispiel 1, verwendet. In Beispiel 16 wird die Polymerdispersion A, bzw. eine Mischung dieser mit dem Polysäure/Polyvinylpyrrolidon-Komplex aus Beispiel 1 und einer Zirkonverbindung (Bozefix® PAS 5200 der Fa. Clariant), verwendet. Die Konzentration des Polysäure/Polyvinylpyrrolidon-Komplexes im Bindemittel beträgt 1 Gew.-%, die der Zirkonverbindung 2 Gew.-%.

**Tabelle 4: Rezeptur der Kunstharzputze der Beispiele 15 und 16**

| Bestandteile | Gewichtsteile |
|---|---|
| Wasser | 51,5 |
| Tylose® MH 10000 YP 2 (Fa. Clariant) | 1,5 |
| Mowiplus® XW 330 (Fa. Clariant) | 3,0 |
| Mergal® K 10 N (Fa. Troy AG) | 2,0 |
| Calgon® N, 10 % (Fa. BK Guilini) | 6,0 |
| Natronlauge, 10 % (Fa. Riedel de Haen) | 2,0 |
| Agitan® 218 (Fa. Münzing Chemie GmbH) | 2,0 |
| Bindemittel | 140,0 |
| Titandioxid Kronos® 2160 (FA. Kronos) | 20,0 |
| China Clay® B (Fa. ECCl) | 20,0 |
| Omyacarb® GU (Fa. Omyacarb) | 150,0 |
| Omyacarb® 130 GU (Fa. Omyacarb) | 170,0 |
| Calcilit® 0,1 - 0,5 (Fa. Omyacarb) | 100,0 |
| Calcilit® 1,5 - 2,0 (Fa. Omyacarb) | 300,0 |
| Testbenzin (Fa. ESSO Becker) | 4,0 |
| Butyldiglykolacetat (Fa. Merck-Schuchardt) | 6,0 |
| Polyethylen FPE 930 T (Fa. Schwarzwälder Textilwerke | 2,0 |
| Heinrich Kaulsmann GmbH) | |
| | 980,0 |

Bestimmung der Waschfestigkeiten der Kunstharzputze:
Die Bestimmung der Waschfestigkeiten der Kunstharzputze aus den Beispielen 15 und 16 erfolgt analog der Bestimmung der Waschfestigkeiten der Fassadenfarben aus den Beispielen 7 bis 13. Als Substrat wurden Etherplanplatten benutzt. Die Schichtdicke der Putze beträgt 3 mm.
Beispiel 15: Waschfestigkeiten von Kunstharzputzen (Schichtdicke 3 mm) bei Raumtemperatur, die als Bindemittel die Dispersion A, mit und ohne Komplex aus Beispiel 1, enthalten:

| Zeit (Minuten) | Transmission ohne Komplex (%) | Transmission mit Komplex (%) |
|---|---|---|
| 60 | 10 | 27 |
| 75 | 43 | 65 |
| 90 | 45 | 68 |

Beispiel 16: Waschfestigkeiten von Kunstharzputzen (Schichtdicke 3 mm) bei Raumtemperatur, die als Bindemittel die Dispersion A bzw. eine Mischung aus der Dispersion A und dem Komplex aus Beispiel 1 und einer Zirkonverbindung (Bozefix® PAS 5200 der Fa. Clariant) enthalten:

| Zeit (Minuten) | Transmission ohne (Komplex +Zirkonverbindung) (%) | Transmission mit (Komplex +Zirkonverbindung) (%) |
|---|---|---|
| 60 | 9 | 30 |
| 75 | 42 | 68 |
| 90 | 44 | 72 |
| 120 | 55 | 80 |
| 150 | 60 | 91 |

Man erkennt, dass die Waschfestigkeiten der Kunstharzputze durch Zugabe eines Polysäure/Polyvinylpyrrolidon-Komplexes, bzw. durch Zugabe eines Polysäure/Polyvinylpyrrolidon-Komplexes sowie einer Zirkonverbindung, erhöht werden.

## Patentansprüche

1. Wasserverdünnbare Bindemittel, basierend auf einer durch Emulsionspolymerisation hergstellten Polymerdispersion, **dadurch gekennzeichnet, dass** sie mindestens einen Polysäure/Polyvinyl-pyrrolidon-Komplex enthalten.

2. Bindemittel gemäß Anspruch 1, **dadurch gekennzeichnet, dass** die Gesamtkonzentration an Polysäure/Polyvinylpyrrolidon-Komplexen im Bindemittel weniger als 10 Gew.-% beträgt.

3. Bindemittel gemäß Anspruch 1 oder 2, **dadurch gekennzeichnet, dass** als Polysäuren Polyacrylsäuren, Polymethacrylsäuren und/oder Poly(comethylvinylether-maleinsäureanhydride) eingesetzt werden.

4. Bindemittel gemäß mindestens einem der Ansprüche 1 bis 3, **dadurch gekennzeichnet, dass** als Polyvinylpyrrolidone Poly(homo-N-vinylpyrrolidone) und/oder Copolymere aus N-Vinylpyrrolidon und Estern von Acrylsäure, Methacrylsäure und/oder Maleinsäure eingesetzt werden.

5. Bindemittel gemäß mindestens einem der Ansprüche 1 bis 4, **dadurch gekennzeichnet, dass** es sich bei den Polysäure/Polyvinylpyrrolidon-Komplexen um 1:1 Komplexe handelt.

6. Bindemittel gemäß mindestens einem der Ansprüche 1 bis 5, **dadurch gekennzeichnet, dass** die Bindemittel noch eine oder mehrere wasserlösliche Zirköriverbindungen enthalten.

7. Bindemittel gemäß mindestens einem der Ansprüche 1 bis 6, **dadurch gekennzeichnet, dass** die Bindemittel noch Salze, Säuren, Basen, niedermolekulare organische Stoffe, Filmbildemittel, Dispergiermittel, Schutzkolloide, Stabilisatoren, Tenside, Emulgatoren, Polymere, Verdickungsmittel, Netzmittel, Pigmente, Füllstoffe, Konservierungsmittel und/oder Entschäumer enthalten.

8. Verfahren zur Herstellung eines wasserverdünnbaren Bindemittels, **dadurch gekennzeichnet, dass** eine durch Emulsionspolymerisation hergestellte Polymerdispersion mit mindestens einem Polysäure/Polyvinylpyrrolidon-Komplex versetzt wird und der Polymerdispersion/Komplex-Mischung anschließend gegebenenfalls noch eine oder mehrere wasserlösliche Zirkonverbindungen, Salze, Säuren, Basen, niedermolekulare organische Stoffe, Filmbildemittel, Dispergiermittel, Schutzkolloide, Stabilisatoren, Tenside, Emulgatoren, Polymere, Verdickungsmittel, Netzmittel, Pigmente, Füllstoffe, Konservierungsmittel und/oder Entschäumer zugesetzt werden.

9. Wasserverdünnbare Beschichtungsmittel, **dadurch gekennzeichnet, dass** sie mindestens ein Bindemittel gemäß mindestens einem der Anspruche 1 bis 7 enthalten.

10. Wasserverdünnbare Beschichtungsmittel gemäß Anspruch 9, **dadurch gekennzeichnet, dass** es sich um Grundierungen, Außenfarben, Innenfarben, Anstrichmittel, Außenputze, Innenputze oder Beschichtungsmittel für Mauerwerke im weitesten Sinne handelt.

11. Verfahren zur Herstellung eines wasserverdünnbaren Beschichtungsmittels, **dadurch gekennzeichnet, dass** einem Bindemittel gemäß mindestens einem der Ansprüche 1 bis 7 die zum Aufbau des Beschichtungsmittels notwendigen Zusatz- und/oder Hilfsstoffe zugesetzt werden.

12. Verfahren zur Herstellung eines wasserverdünnbaren Beschichtungsmittels, **dadurch gekennzeichnet, dass** ein wasserverdünnbares Beschichtungsmittel mit mindestens einem Bindemittel gemäß mindestens einem der Ansprüche 1 bis 7 versetzt wird.

13. Verfahren zur Herstellung eines wasserverdünnbaren Beschichtungsmittels, **dadurch gekennzeichnet, dass** ein wasserverdünnbares Beschichtungsmittel, das eine durch Emulsionspolymerisation hergestellte Polymerdispersion enthält, mit mindestens einem Polysäure/Polyvinylpyrrolidon-Komplex und gegebenenfalls einer oder mehreren wasserlöslichen Zirkonverbindungen versetzt wird.

14. Verwendung von Polysäure/Polyvinylpyrrolidon-Komplexen und Mischungen, enthaltend mindestens einen Polysäure/Polyvinylpyrrolidon-Komplex und gegebenenfalls eine oder mehrere wasserlösliche Zirkonverbindungen, in wasserverdünnbaren Bindemitteln, die durch Emulsionspolymerisation hergestellte Polymerdispersionen enthalten, und in Beschichtungsmitteln, die durch Emulsionspolymerisation hergestellte Polymerdispersionen enthalten, als Trocknungsbeschleuniger.

## Claims

1. A water-thinnable binder based on a polymer dispersion prepared by emulsion polymerization, **characterized in that** it comprises at least one polyacid/polyvinylpyrrolidone complex.

2. The binder of claim 1, **characterized in that** the overall concentration of polyacid/polyvinylpyrrolidone complexes in the binder is less than 10% by weight.

3. The binder of claim 1 or 2, **characterized in that** polyacids used comprise polyacrylic acids, polymethacrylic acids and/or poly(co-methyl vinyl ether-maleic anhydrides).

4. The binder of at least one of claims 1 to 3, **characterized in that** polyvinylpyrrolidones used comprise poly(homo-N-vinylpyrrolidones) and/or copolymers of N-vinylpyrrolidone and esters of acrylic acid, methacrylic acid and/or maleic acid.

5. The binder of at least one of claims 1 to 4, **characterized in that** the polyacid/polyvinylpyrrolidone complexes are 1:1 complexes.

6. The binder of at least one of claims 1 to 5, **characterized in that** the binder further comprises one or more water-soluble zirconium compounds.

7. The binder of at least one of claims 1 to 6, **characterized in that** the binder further comprises salts, acids, bases, low molecular mass organic substances, film formers, dispersants, protective colloids, stabilizers, surfactants, emulsifiers, polymers, thickeners, wetting agents, pigments, fillers, preservatives and/or defoamers.

8. A process for preparing a water-thinnable binder, **characterized in that** at least one polyacid/polyvinylpyrrolidone complex is added to a polymer dispersion prepared by emulsion polymerization and subsequently, where appropriate, one or more water-soluble zirconium compounds, salts, acids, bases, low molecular mass organic substances, film formers, dispersants, protective colloids, stabilizers, surfactants, emulsifiers, polymers, thickeners, wetting agents, pigments, fillers, preservatives and/or defoamers are added to the polymer dispersion/complex mixture.

9. A water-thinnable coating composition, **characterized in that** it comprises at least one binder of at least one of claims 1 to 7.

10. The water-thinnable coating composition of claim 9, **characterized in that** it is a primer, exterior paint, interior paint, coating material, exterior render, interior render or coating composition for masonry constructions in the widest sense.

11. A process for preparing a water-thinnable coating composition, **characterized in that** the additives and/or auxiliaries necessary for building up the coating composition are added to a binder of at least one of claims 1 to 7.

12. A process for preparing a water-thinnable coating composition, **characterized in that** at least one binder of at least one of claims 1 to 7 is added to a water-thinnable coating composition.

13. A process for preparing a water-thinnable coating composition, **characterized in that** at least one polyacid/polyvinylpyrrolidone complex and, where appropriate, one or more water-soluble zirconium compounds are added to a water-thinnable coating composition which comprises a polymer dispersion prepared by emulsion polymerization.

14. Use of polyacid/polyvinylpyrrolidone complexes and mixtures comprising at least one polyacid/polyvinylpyrrolidone complex and, where appropriate, one or more water-soluble zirconium compounds in water-thinnable binders which comprise polymer dispersions prepared by emulsion polymerization and in coating compositions which comprise polymer dispersions prepared by emulsion polymerization as drying accelerators.

## Revendications

1. Liants diluables à l'eau, à base d'une dispersion de polymères préparée par polymérisation en émulsion, **caractérisés en ce qu'**ils contiennent au moins un complexe polyacide/polyvinylpyrrolidone.

2. Liants selon la revendication 1, **caractérisés en ce que** la concentration totale des complexes polyacide/polyvinylpyrrolidone dans le liant est inférieure à 10 % en poids.

3. Liants selon la revendication 1 ou 2, **caractérisés en ce qu'**on utilise en tant que polyacides les poly(acides acryliques), les poly(acides méthacryliques) et/ou les copolymères de méthylvinyléther et d'anhydride maléique.

4. Liants selon au moins l'une des revendications 1 à 3, **caractérisés en ce qu'**on utilise en tant que polyvinylpyrrolidones des homopolymères de la N-vinylpyrrolidone et/ou des copolymères de N-vinylpyrrolidone et d'esters de l'acide acrylique, de l'acide méthacrylique et/ou de l'acide maléique.

5. Liants selon au moins l'une des revendications 1 à 4, **caractérisés en ce que**, pour ce qui concerne les complexes polyacide/polyvinylpyrrolidone, il s'agit de complexes 1:1.

6. Liants selon au moins l'une des revendications 1 à 5, **caractérisés en ce que** les liants contiennent encore un ou plusieurs composés du zirconium solubles dans l'eau.

7. Liants selon au moins l'une des revendications 1 à 6, **caractérisés en ce que** les liants contiennent encore des sels, des acides, des bases, des substances organiques à faible masse moléculaire, des agents filmogènes, des dispersants, des colloïdes protecteurs, des stabilisants, des tensioactifs, des émulsifiants, des polymères, des épaississants, des mouillants, des pigments, des matières de charge, des conservateurs et/ou des antimousses.

8. Procédé de préparation d'un liant diluable à l'eau, **caractérisé en ce qu'**on ajoute à une dispersion de polymères préparée par polymérisation en émulsion au moins un complexe polyacide/polyvinylpyrrolidone, puis que l'on ajoute au mélange dispersion de polymère/complexe éventuellement encore un ou plusieurs composés du zirconium solubles dans l'eau, des sels, des acides, des bases, des substances organiques à faible masse moléculaire, des substances filmogènes, des dispersants, des colloïdes protecteurs, des stabilisants, des tensioactifs, des émulsifiants, des polymères, des épaississants, des mouillants, des pigments, des matières de charge, des conservateurs et/ou des antimousses.

9. Compositions de revêtement diluables à l'eau, **caractérisées en ce qu'**elles contiennent au moins un liant selon au moins l'une des revendications 1 à 7.

10. Compositions de revêtement diluables à l'eau selon la revendication 9, **caractérisées en ce qu'**il s'agit de couches de fond, de peintures pour extérieur, de peintures pour intérieur, de peintures, d'enduits pour extérieur, d'enduits pour intérieur, ou de compositions de revêtement pour maçonnerie au sens le plus large.

11. Procédé de préparation d'une composition de revêtement diluable à l'eau, **caractérisé en ce qu'**on ajoute à un liant selon au moins l'une des revendications 1 à 7 les additifs et/ou adjuvants nécessaires à la constitution de la composition de revêtement.

12. Procédé de préparation d'une composition de revêtement diluable à l'eau, **caractérisée en ce qu'**on ajoute à une composition de revêtement diluable à l'eau au moins un liant selon au moins l'une des revendications 1 à 7.

13. Procédé de préparation d'une composition de revêtement diluable à l'eau, **caractérisé en ce qu'**on ajoute à une composition de revêtement diluable à l'eau, contenant une dispersion de polymères préparée par polymérisation en émulsion, au moins un complexe polyacide/polyvinylpyrrolidone et éventuellement un ou plusieurs composés du zirconium solubles dans l'eau.

14. Utilisation, en tant qu'accélérateur de séchage, de complexes polyacides/polyvinylpyrrolidones et de mélanges contenant au moins un complexe polyacide/polyvinylpyrrolidone et au moins un ou plusieurs composés du zirconium solubles dans l'eau, dans des liants diluables à l'eau, qui contiennent des dispersions de polymères préparées par polymérisation en émulsion, et dans des compositions de revêtement qui contiennent des dispersions de polymères préparées par polymérisation en émulsion.
